# DEMANDE DE BREVET EUROPEEN

(11) **EP 0 788 742 A2**
(43) Date de publication de la demande: **13.08.1997**
(21) Numéro de dépôt: 97200184.6
(22) Date de dépôt: 23.01.1997
(51) Int. Cl.: A21C 9/02, F26B 15/12, F26B 15/00

(54) **Barre de séchage de pâtes alimentaires**

(30) Priorité: 09.02.1996 CH 338/96
(71) Demandeur: SOCIETE DES PRODUITS NESTLE S.A., 1800 Vevey (CH)
(72) Inventeur: Russo, Pietro, 8400 Winterthur (CH)
(74) Mandataire: Wavre, Claude-Alain

(57) **Abrégé**

Barre de suspension pour le séchage de pâtes alimentaires longues, présentant en section transversale un profil qui va se rétrécissant de haut en bas, et dont la surface présente un dessin en relief à motif récurrent tel que les pâtes reposent sur plusieurs aspérités successives du dessin le long de leur partie coudée en contact avec la barre.

## Description

La présente invention a pour objet une barre de suspension pour le séchage de pâtes alimentaires longues, présentant en section transversale un profil qui va se rétrécissant de haut en bas.

Pour réaliser industriellement le séchage de pâtes alimentaires longues telles que des spaghetti, on peut découper à la longueur voulue des pâtes fraîches telles que sortant d'une presse et les suspendre pliées ou coudées à cheval sur des barres de séchage que l'on fait circuler dans un séchoir en accrochant leurs extrémités avec des manetons de suspension à des chaînes latérales d'entraînement, la partie coudée des pâtes étant découpée et écartée à la sortie du séchoir, par exemple.

Afin d'éviter que les pâtes n'y adhèrent, ces barres peuvent être réalisées en aluminium éloxé ou en acier inoxydable, par exemple. Mais cette solution au problème du collage n'est pas entièrement satisfaisante dans la mesure où elle doit néanmoins être accompagnée d'autres mesures telles qu'un lavage fréquent des barres et/ou leur enduction avec un film d'huile.

FR 2493107 (BARILLA) propose de remplacer la solution des barres réalisées en aluminium éloxé par une autre solution apparemment plus économique, mais pas entièrement satisfaisante non plus, à savoir par des barres recouvertes d'une gaine amovible en polypropylène.

On connaît en outre par EP 0385088 (BARILLA) des barres dont le haut du profil en section transversale est aplati de manière à diminuer la longeur sur laquelle la pâte est en contact avec la barre, par rapport à une barre correspondante dont le haut du profil présente la forme d'un arc de cercle.

La présente invention a pour but de proposer une solution plus satisfaisante au problème du collage des pâtes alimentaires longues aux barres de séchage qui permette de renoncer à un nettoyage trop fréquent de ces barres ainsi qu'à toute enduction d'huile, tout en autorisant le recyclage dans la fabrication de la pâte des coudes de pâtes découpés à la sortie du séchoir.

A cet effet, la barre de suspension pour le séchage de pâtes alimentaires longues selon la présente invention se distingue par le fait que sa surface présente un dessin en relief à motif récurrent tel que les pâtes reposent sur plusieurs aspérités successives du dessin le long de leur partie coudée en contact avec la barre.

On a constaté en effet qu'une telle barre permet effectivement d'espacer les nettoyages, de renoncer à l'enduction d'huile qui peut à la longue provoquer un noircissement indésiré des pâtes, et de recycler des coudes parfaitement propres dans la fabrication de la pâte, après les avoir réduits en poudre, plutôt que de les jeter.

Dans un premier mode de réalisation préféré de la présente invention, ledit motif récurrent présente la forme des mailles d'une grille.

Dans ce premier mode de réalisation préféré, la barre peut être réalisée sous forme d'une tôle d'aluminium ou d'acier inoxydable dûment pliée et profilée recouverte d'un treillis métallique, par exemple.

Dans un second mode de réalisation préféré, ledit motif récurrent peux présenter la forme de bosses arrondies inscrites entre les mailles d'un double réseau de lignes qui s'entrecroisent en surface de la barre, ou la forme de rangées de bosses à bases imbriquées les unes dans les autres, ou la forme de sillons alternant avec des crêtes, ou la forme de creux arrondis inscrits entre les mailles d'un double réseau de lignes qui s'entrecroisent en surface de la barre, ou encore la forme de rangées de creux à bords imbriqués les uns dans les autres, par exemple.

Dans ce second mode de réalisation préféré, la barre peut être réalisée en tôle d'aluminium, notamment d'aluminium éloxé ou laqué, ou d'acier inoxydable gaufrée, emboutie et/ou ondulée, découpée en forme de rectangle allongé, pliée longitudinalement sur elle-même de manière à réaliser en section transversale un profil au sommet arrondi et aux côtés rectilignes qui se rapprochent de haut en bas avant d'être pliés l'un vers l'autre et joints par une soudure à la base, par exemple.

On peut partir en particulier de tôles gaufrées, embouties et/ou ondulées du commerce, telles que les tôles d'acier inoxydable de type Mönster AN2, AN5 ou AN6 de la firme AVESTA, Sheffield, Angleterre représentée par la maison KOHLER, Zurich, Suisse, ou les tôles d'aluminium de type "Dessinalblech gestreift" de la firme ALLEGA, Zurich, Suisse, par exemple.

La barre de suspension pour le séchage de pâtes alimentaires longues selon la présente invention est décrite plus en détails ci-après en référence au dessin annexé qui en représente quelques formes de réalisation et dans lequel:
- la Figure 1 représente une vue en coupe transversale d'un mode de réalisation préféré de la barre,
- la Figure 2 est une vue schématique de côté du mode de réalisation de la barre représenté à la Figure 1,
- la Figure 3 est une vue de la surface du côté de la barre représentée à la Figure 1 montrant une forme de réalisation du motif récurrent que la surface de la barre peut présenter en relief,
- la Figure 4 est une vue de la surface du côté de la barre représentée à la Figure 1 montrant une autre forme de réalisation du motif récurrent que la surface de la barre peut présenter en relief, et
- la Figure 5 est une vue de la surface du côté de la barre représentée à la Figure 1 montrant encore une autre forme de réalisation du motif récurrent que la surface de la barre peut présenter en relief.

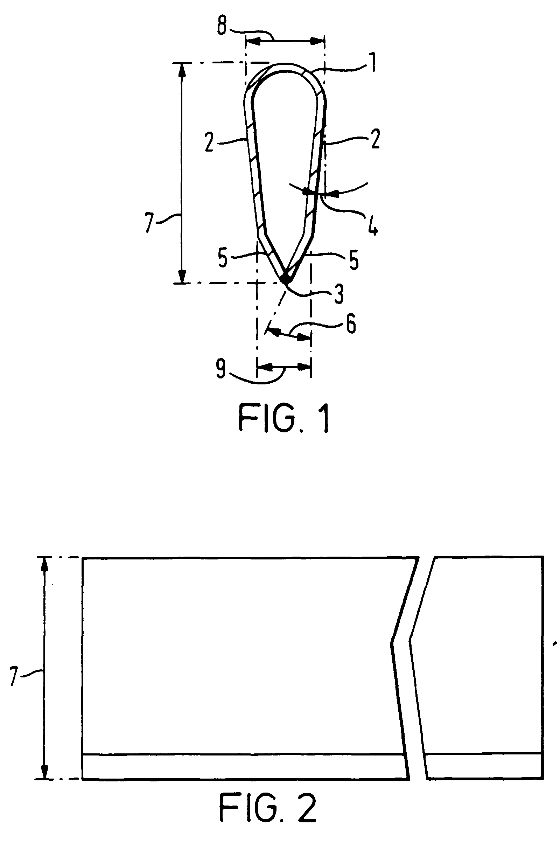

Comme on le voit à la Figure 1, la barre présente en section transversale un profil qui va se rétrécissant de haut en bas.

Dans le mode de réalisation représenté, la barre est réalisée en tôle d'aluminium ou d'acier inoxydable gaufrée, emboutie et/ou ondulée. Elle présente en section transversale un profil au sommet 1 arrondi en demi-cercle et aux côtés rectilignes 2 qui se rapprochent de haut en bas avant d'être pliés l'un vers l'autre et joints par une soudure à la base 3.

La surface plane de chaque côté 2 forme un angle 4 de 5,5° avec un plan vertical parallèle à la barre.

La partie pliée 5 du bas de chaque côté forme un angle 6 de 25° avec un plan vertical parallèle à la barre.

La barre présente une hauteur 7 de 45 mm, une épaisseur au sommet 8 de 16 mm, et une épaisseur au niveau du pli du bas des côtés 9 de 11 mm.

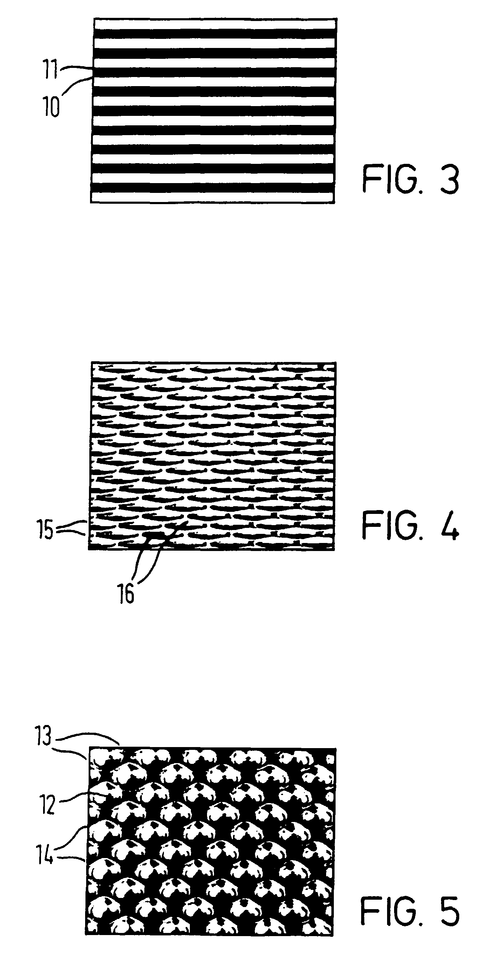

Comme on le voit aux Figures 3, 4 et 5, la surface de la barre présente un dessin en relief à motif récurrent tel que les pâtes reposent sur plusieurs aspérités successives du dessin le long de leur partie coudée en contact avec la barre.

Dans sa forme de réalisation représentée à la Figure 3, le motif récurrent que la surface de la barre peut présenter en relief présente la forme de sillons 10 alternant avec des crêtes 11 (tôle d'aluminium de type "Dessinalblech gestreift" de la firme ALLEGA).

Dans sa forme de réalisation représentée à la Figure 4, le motif récurrent présente la forme de rangées 15 de bosses 16 à bases imbriquées les unes dans les autres (tôle d'acier inoxydable de type Mönster AN5 de la firme AVESTA).

Dans sa forme de réalisation représentée à la Figure 5, le motif récurrent présente la forme de bosses arrondies 12 inscrites entre les mailles d'un double réseau de lignes 13, 14 qui s'entrecroisent en surface de la barre (tôle d'acier inoxydable de type Mönster AN6 de la firme AVESTA).

## Revendications

1. Barre de suspension pour le séchage de pâtes alimentaires longues, présentant en section transversale un profil qui va se rétrécissant de haut en bas, caractérisée par le fait que sa surface présente un dessin en relief à motif récurrent tel que les pâtes reposent sur plusieurs aspérités successives du dessin le long de leur partie coudée en contact avec la barre.

2. Barre selon la revendication 1, caractérisée par le fait que ledit motif récurrent présente la forme des mailles d'une grille.

3. Barre selon la revendication 1, caractérisée par le fait que ledit motif récurrent présente la forme de bosses arrondies inscrites entre les mailles d'un double réseau de lignes qui s'entrecroisent en surface de la barre.

4. Barre selon la revendication 1, caractérisée par le fait que ledit motif récurrent présente la forme de rangées de bosses à bases imbriquées les unes dans les autres.

5. Barre selon la revendication 1, caractérisée par le fait que ledit motif récurrent présente la forme de sillons alternant avec des crêtes.

6. Barre selon la revendication 1, caractérisée par le fait que ledit motif récurrent présente la forme de creux arrondis inscrits entre les mailles d'un double réseau de lignes qui s'entrecroisent en surface de la barre.

7. Barre selon la revendication 1, caractérisée par le fait que ledit motif récurrent présente la forme de rangées de creux à bords imbriqués les uns dans les autres.

8. Barre selon la revendication 2, réalisée sous forme d'une tôle dûment profilée recouverte d'un treillis métallique.

9. Barre selon la revendications 1, réalisée en tôle d'aluminium ou d'acier inoxydable gaufrée, emboutie et/ou ondulée, découpée en forme de rectangle allongé, pliée longitudinalement sur elle-même de manière à réaliser en section transversale un profil au sommet arrondi et aux côtés rectilignes qui se rapprochent de haut en bas avant d'être pliés l'un vers l'autre et joints par une soudure à la base.
